# EUROPEAN PATENT APPLICATION

(11) **EP 2 656 998 A1**
(43) Date of publication of application: **30.10.2013**
(21) Application number: 12002834.5
(22) Date of filing: 23.04.2012
(51) Int. Cl.: B29C 45/14, H01H 33/662, H01H 33/66

(54) **Pole part for medium voltage use, and method for manufacture the same**

(71) Applicant: ABB Technology AG, 8050 Zürich (CH)
(72) Inventor: Klaska, Arne, Dr., 40235 Düsseldorf (DE); Gentsch, Dietmar, Dr.-Ing., 40882 Ratingen (DE); Engelke, Robin, 29308 Winsen (DE); Baier, Wilfried, 40885 Ratingen (DE)
(74) Representative: Schmidt, Karl Michael

(57) **Abstract**

The invention relates to a pole part for medium voltage use, with an insulating coverage made of duroplastic or thermoplastic material, and method for manufacture the same, according to the preamble of claims 1 and 4. In order to enhance the manufacture of pole parts, in that way, that the ready pole part could be easier released out of the mould, and additionally that the interface between elements made of different materials are tightly closed, in order to generate reproducable dielectric withstand performance in the manufacture, the transition area between different elements of the pole part are commonly flat in such a way, that rounded edges and/or steps are avoided.

## Description

The invention relates to a pole part for medium voltage use, with an insulating coverage made of duroplastic or thermoplastic material, and method for manufacture the same, according to the preamble of claims 1 and 4.

Insulating coverages for pole parts are using moulding technology.

For the use of duroplastic coverage, manufactured for example as expoxy resin, as well as for the use of thermoplastic coverage, manufactured by injection moulding, the use of sealings between inlays (e.g. contact terminals) and mould in order to avoid overspraying or leakage of the mould, especially during injection moulding process is needed.

Usually separate sealing elements like o-rings etc are used for example for low pressure injection during the moulding process.

In case of no separate sealing elements are used, line contact (1-dimensional) sealing by metallic sealing, high pressure injection, is used e.g. on rounded, circular edges on the contact terminal and sharp, circular edge at the mould.

The technical problem in these known state of the art methods is, that for example in high pressure injection, the mould cuts into the inlay which is for example a contact terminal of the pole part. In consequence of that, the release of the pole part from mould after moulding process could be problematic due to wedge function of the cutting of the sealing edge into the rounding of the inlay.

A further problem ist, that the sealing function depends on quality of rounding and requires quite narrow tolerances of the terminal in the sealing area, especially of rounding, which is difficult to measure it could be a reason for quality issues.

The positioning of inlays strongly depends on contact between mould/additive part and the inlay, for example the contact terminal of a medium voltage pole part. Because of this, the parallel alignment of specific surfaces is difficult.

So the invention relates to a pole part for medium voltage use, with an insulating coverage made of duroplastic or thermoplastic material, wherein for example transitions between different materials and/or topographic structures of implemented vacuum interrupter and/or connecting terminals are covered tightly by the commonly moulded insulating coverage, wherein the transition area between different elements of the pole part are commonly flat in such a way, that rounded edges and/or steps are avoided.

The placement of sealings in the mould for the resin or injection process will become much more effective, because no steps or edges or rounded areas occur in the area on which the sealing comes into contact with the moulded pole part. So each form of leakage which produces edges or ridges are avoided, so that the ready moulded pole part can easier be released out of the mould.

So the benefits of the invention are simplification of manufacture and consequently cost reduction, as well as it generates safer production due to planar sealing and avoidance of aforesaid cutting edges.

Also new additional construction of sealing areas and alignment surface at contact terminals for thermoplastic pole parts in medium voltage application are possible, which supports a high variety of pole part design.

A further embodiment is given by that the transition areas are located between the contact terminal of the pole part and the ending edge of the insulating coverage of the pole part.

Furthermore is advantageous if the transition area between an inlay of the pole part and the mould are commonly flat in such a way, that rounded edges and/or steps are avoided.

According to a method for manufacture a pole part for medium voltage use, with an insulating coverage made of duroplastic or thermoplastic material, wherein transitions between different materials and topographic structures of implemented vacuum interrupter and/or connecting terminals are covered tightly by the commonly moulded insulating coverage, the invention is, that the transition area between different elements of the pole part are commonly flat or laying in a common plane or plane area in such a way, that before moulding e.g. injection of the duroplastic or thermoplastic material, the there placed sealings are positioned in a commonly flat area, so that rounded edges and/or steps are avoided, in order to avoid the occurance of cutting edges in that area.

A further embodiment of this method is given by that the transition areas and the sealings are located between the contact terminal of the pole part and the ending edge of the insulating coverage of the pole part in that way, that no cutting edge occurs.

Also for the method it is an advantageous embodiment that the transition area between an inlay of the pole part and the mould are commonly flat in such a way, that rounded edges and/or steps are avoided.
Figure 1 shows an embodiment of the invention.
Figure 2 shows in comparison the state of the art.

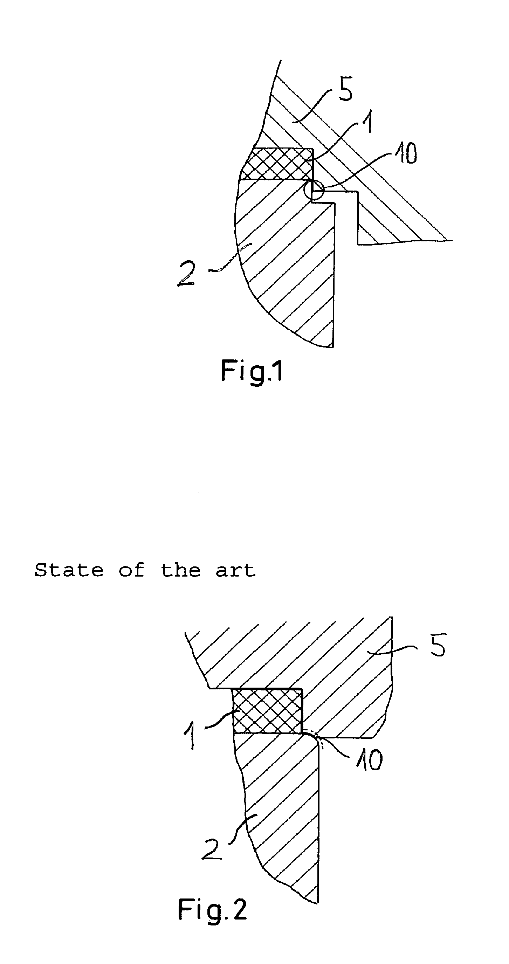

Figure 1 shows the areal according to the invention, in which the sealing area 10 is between a plastic part 1 and a contact part 2 of an electric terminal of a pole part. The area in which the sealing during the moulding will be located is flat. That means that between the material transition from the plastic part 1 and the contact terminial part 2 is without any step or grave, it is flat, so that no cutting edge will occur during the moulding. Position number 5 shows a part of the mould. The contact part 2 here is an inlay.

In contrast to that, figure 2 shows the state of the art. It is seen that the transition area between the plastic part and the contact part causes a prominent edge, so that a sealing in that area can not be optimal, and during the moulding cutting edge will occur, so that the ready pole part can not easily be put out of the mould.

So the invention results in a list of advantages:
- An additional sealing area (integrated sealing area) is easily given by the constructive solution.
- A planar sealing, th.m. a 2-dimensional sealing area is created without any third dimension steps etc.
- The resulting advantageous sealing for injection moulding is given for thermoplastic and similar materials.
- Also a metallic sealing without additional sealing elements is possible, if the sealing area is created in the described way.
- A secure sealing for high pressure injection is possible.
- The sealing function is independent from outlines of inlay. That results in complex possible outline.
- An easy alignment of the inlay regarding position in the mould is given, since it just depends on easily to check dimensions and position tolerance of the sealing area.

## Claims

1. Pole part for medium voltage use, with an insulating coverage made of duroplastic or thermoplastic material, wherein transitions between different materials and topographic structures of implemented vacuum interrupter and/or connecting terminals are covered tightly by the commonly moulded insulating coverage,
**characterized in**
**that** the transition area between different elements of the pole part are commonly flat in such a way, that rounded edges and/or steps are avoided.

2. Pole part for medium voltage use, with an insulating coverage made of duroplastic or thermoplastic material, wherein transitions between different materials and topographic structures of implemented vacuum interrupter and/or connecting terminals are covered tightly by the commonly moulded insulating coverage, particularly according to claim 1,
**characterized in,**
**that** the transition area between an inlay of the pole part and the mould are commonly flat in such a way, that rounded edges and/or steps are avoided.

3. Pole part according to claim 1 or 2,
**characterized in**
**that** the transition areas are located between the contact terminal of the pole part and the ending edge of the insulating coverage of the pole part.

4. Method for manufacture a pole part for medium voltage use, with an insulating coverage made of duroplastic or thermoplastic material, wherein transitions between different materials and topographic structures of implemented vacuum interrupter and/or connecting terminals are covered tightly by the commonly moulded insulating coverage,
**characterized in**
**that** the transition area between different elements of the pole part are commonly flat or laying in a common plane or plane area in such a way, that before moulding e.g. injection of the duroplastic or thermoplastic material, the there placed sealings are positioned in a commonly flat area, so that rounded edges and/or steps are avoided, in order to avoid the occurance of cutting edges in that area.

5. Method for manufacture a pole part for medium voltage use, with an insulating coverage made of duroplastic or thermoplastic material, wherein transitions between different materials and topographic structures of implemented vacuum interrupter and/or connecting terminals are covered tightly by the commonly moulded insulating coverage, particularly according to claim 4, **characterized in**
**that** the transition area between inlays of the pole part and the mould are commonly flat or laying in a common plane or plane area in such a way, that before moulding e.g. injection of the duroplastic or thermoplastic material, the there placed sealings are positioned in a commonly flat area, so that rounded edges and/or steps are avoided, in order to avoid the occurance of cutting edges in that area.

6. Method according to claim 4 or 5,
**characterized in**
**that** the transition areas and the sealings are located between the contact terminal of the pole part and the ending edge of the insulating coverage of the pole part in that way, in order to avoid the occurance of cutting edges in that aforesaid transition area or areas.
